(19) Europäisches Patentamt

European Patent Office

Office européen des brevets

(11) Veröffentlichungsnummer: **0 347 576 B1**

(12) # EUROPÄISCHE PATENTSCHRIFT

(45) Veröffentlichungstag der Patentschrift: **08.12.93**

(21) Anmeldenummer: **89108646.4**

(22) Anmeldetag: **13.05.89**

(51) Int. Cl.⁵: **E03B 3/15**, B01D 19/00

(54) Brunnen zum Austreiben leichtflüchtiger Verunreinigungen aus gespanntem Grundwasser.

(30) Priorität: **23.06.88 DE 8808089 U**

(43) Veröffentlichungstag der Anmeldung:
**27.12.89 Patentblatt 89/52**

(45) Bekanntmachung des Hinweises auf die
Patenterteilung:
**08.12.93 Patentblatt 93/49**

(84) Benannte Vertragsstaaten:
**AT CH DE ES FR GB IT LI NL SE**

(56) Entgegenhaltungen:
EP-A- 0 242 665      DE-C- 3 805 200
DE-C- 3 811 962      GB-A- 979 198
US-A- 4 478 765      US-A- 4 608 163
US-A- 4 749 497

(73) Patentinhaber: **IEG Industrie-Engineering GmbH**
**Lilienthalstrasse 6**
**D-72770 Reutlingen(DE)**

(72) Erfinder: **Bernhardt, Bruno**
**Burgstrasse 85**
**D-7410 Reutlingen 1(DE)**

(74) Vertreter: **Möbus, Rudolf, Dipl.-Ing.**
**Hindenburgstrasse 65**
**D-72762 Reutlingen (DE)**

EP 0 347 576 B1

## Beschreibung

Die Erfindung betrifft einen Brunnen zum Austreiben leichtflüchtiger Verunreinigungen aus dem Grundwasser und dem von ihm durchströmten Erdreich durch Erzeugung von Unterdruck in einem bis in den Bereich des verunreinigten Grundwassers getriebenen Brunnenschacht und Zuleitung von Frischluft unterhalb des Wasserspiegels im Brunnenschacht.

Anordnungen der eingangs genannten Art sind bereits vorgeschlagen worden, siehe EP-A-0 242 665 (=DE-A-36 25 488). Im Gegensatz zu den herkömmlichen Verfahren, mit erheblichem Energieaufwand Druckluft in das einen Brunnenschacht umgebende Erdreich und/oder in das im Brunnenschacht angesammelte Grundwasser einzupressen, wird bei dieser Anordnung Luft allein unter der Wirkung eines im wasserfreien Bereich des Brunnenschachtes gebildeten Unterdruckes eingeleitet. Dabei hat sich gezeigt, daß hierbei mit relativ geringem Unterdruck überraschend große Mengen an leichtflüchtigen Verunreinigungen in gasförmigem Zustand abgesaugt werden können und ein beachtlich größerer Wirkungsgrad erzielt wird, als bei den erwähnten herkömmlichen Verfahren. Bei den herkömmlichen Verfahren werden durch die angewandten hohen Drücke Laminarströmungen abgerissen und Wirbel gebildet, welche den Wirkungsgrad der Anlagen erheblich vermindern.

Die Durchführung des vorstehend genannten Verfahrens wird in Fällen erschwert, in denen gespanntes Grundwasser, also unter Überdruck stehendes Grundwasser, behandelt werden muß. Dieser Fall kann insbesondere dann auftreten, wenn über den Brunnenschacht Mineralwasser gereinigt werden muß, das häufig unter Überdruck steht.

Der Erfindung liegt die Aufgabe zugrunde, die eingangs genannte Anordnung so auszubilden, daß sie auch bei gespanntem Grundwasser einwandfrei betrieben werden kann.

Die gestellte Aufgabe wird mit einem Brunnen der eingangs genannten Art erfindungsgemäß mit den aus dem kennzeichnenden Teil des Hauptanspruches ersichtlichen Merkmalen gelöst.

Durch den Druckaufnahmeraum wird der Brunnenschacht nach außen abgeschlossen, so daß durch die mit Ausgleichsdruck zugeführte Frischluft ein wasserfreier Kopfbereich des Brunnenschachtes, in welchem dann der für die Reinigungswirkung entscheidende Unterdruck relativ zu dem im Brunnenschacht herrschenden Druck, der über dem atmosphärischen Druck liegt, geschaffen werden kann. Bei der bevorzugten, bereits vorgeschlagenen Ausbildung eines unterhalb des Flüssigkeitsspiegels befindlichen Luftaufnahmeraumes, der vom Flüssigkeitsraum des Brunnenschachtes durch eine Siebwandung abgegrenzt ist, kann der Luftaufnahmeraum über eine Luftleitung mit dem Druckaufnahmeraum verbunden sein, in welch letzteren Frischluft mit dem Kompensationsdruck zugeführt wird.

Damit in Stillstandszeiten der Anordnung kein gespanntes Grundwasser in den Druckaufnahmeraum eindringen kann, können in der zum Luftaufnahmeraum führenden Luftleitung und/oder in einem vor der Ansaugöffnung des Unterdruckerzeugers ausgebildeten Ansaugschacht zweckmäßig ein Schwimmerventil angeordnet sein. Bei Wiederinbetriebnahme der Anordnung kann mit Hilfe von Druckluft zunächst wieder ein wasserfreier Bereich am oberen Ende des Brunnenschachtes geschaffen werden. Der Druck wird schließlich auf den Kompensationsdruckwert abgesenkt, bevor der Unterdruckerzeuger in Betrieb gesetzt wird und gegenüber dem Kompensationsdruck einen Unterdruck im oberen Brunnenschachtbereich erzeugt.

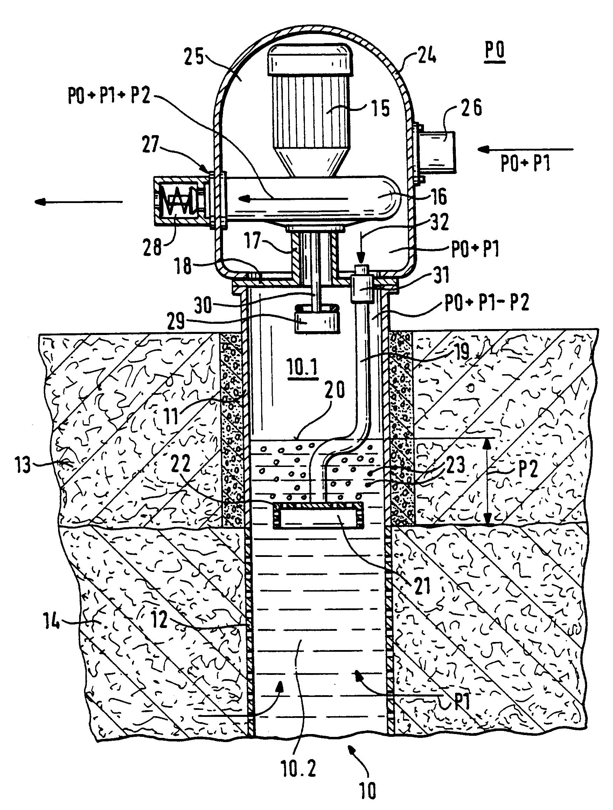

Nachfolgend wird ein Ausführungsbeispiel einer erfindungsgemäß ausgebildeten Anordnung anhand der beiliegenden Zeichnung näher erläutert.

Die Zeichnung zeigt einen in seinem oberen Endbereich 10.1 mittels ungelochter Rohre 11 und in seinem tieferen Bereich 10.2 mittels Siebrohren 12 armierten Brunnenschacht 10, der durch eine das Grundwasser hemmende obere Bodenschicht 13 bis in eine Grundwasser führende untere Bodenschicht 14 hinein ausgeführt ist. Das Grundwasser ist gespannt und strömt somit in den Brunnenschacht 10 unter einem Druck $P_1$, der größer ist als der Atmosphärendruck $P_o$.

Die Anordnung zum Austreiben leichtflüchtiger Verunreinigungen aus dem in den Brunnenschacht 10 eindringenden Grundwasser besteht aus einem mittels eines Elektromotors 15 betriebenen Ventilator 16 zur Erzeugung eines Unterdrucks im oberen grundwasserfreien Brunnenschachtbereich 10.1. Vor der Ansaugöffnung des Ventilators 16 ist ein Ansaugkanal 17 ausgebildet, der bis zu einer in einer die äußere Öffnung des Brunnenschachtes 10 verschließenden Abdeckwandung 18 ausgebildeten Luftansaugöffnung führt. In dieser Abdeckwandung 18 ist zusätzlich eine Öffnung für eine durch einen Schlauch gebildete Luftleitung 19 ausgebildet, die zu einem unterhalb des sich im Brunnenschacht bildenden Grundwasserspiegels 20 ausgebildeten Luftaufnahmeraum 21 führt. Der Luftaufnahmeraum 21 ist nach oben und nach der Seite durch eine Siebwandung 22 begrenzt, durch deren Öffnungen hindurch die Luft aus dem Luftaufnahmeraum 21 in Form von Luftbläschen 23 zum Flüssigkeitsspiegel 20 aufsteigen kann.

Auf die Abschlußwandung 18 des Brunnenschachtes 10 ist ein Behälter 24 aufgesetzt, in welchem der Ventilator 16 mit seinem Antriebsmotor 15 angeordnet ist und der einen Druckaufnahmeraum 25 begrenzt. Der Behälter weist nach außen eine erste Öffnung für eine Frischluftleitung 26 und eine zweite Öffnung 27 für die Abluft des als Unterdruckerzeuger dienenden Ventilators 16 auf. Vor der zweiten Öffnung 27 ist ein Druckbegrenzungsventil 28 angeordnet.

Die in der Abschlußwandung 18 ausgebildete Öffnung für den Ansaugkanal 17 des Ventilators 16 ist durch ein Schwimmerventil verschließbar, dessen Schwimmer 29 auf einer zentralen Führungsstange 30 längsverschiebbar gelagert ist. Auch die Luftleitung 19 ist im Bereich der Abschlußwandung 18 durch ein Schwimmerventil 31 verschließbar.

Im tieferen Brunnenschachtbereich 10.2 herrscht der durch das gespannte Grundwasser gegebene Druck P1. Zwischen dem Luftaufnahmeraum 21 und dem Wasserspiegel 20 wirkt der Ansaugdruck P2 des Ventilators 16, wie in der Zeichnung durch einen Doppelpfeil angedeutet ist. Durch die Frischluftleitung 26 wird Frischluft mit einem Druck Po + P1 in den Druckaufnahmeraum 25 eingeleitet. Dieser Druck ist also so bemessen, daß durch ihn der Grundwasser-Überdruck P1 kompensiert wird. Die unter diesem Kompensationsdruck stehende Frischluft wird in Richtung des eingetragenen Pfeiles 32 unter der Wirkung des Ventilators 16 durch die Luftleitung 19 in den Luftaufnahmeraum 21 geleitet. In dem grundwasserfreien Brunnenschachtbereich 10.1 bildet sich unter der Saugwirkung des Ventilators 16 ein Druck Po + P1-P2. Der Druck auf der Ausgangsseite des Ventilators 16 beträgt Po + P1 + P2.

Mit Hilfe der Druckaufnahmekammer 25 läßt sich die Luftabsauganordnung also auch bei gespanntem Grundwasser mit der angestrebten und erfahrungsgemäß guten Reinigungswirkung betrieben. Wird der Ventilator 16 abgeschaltet und die Frischluftzufuhr unterbrochen, kann im Brunnenschacht 10 der Flüssigkeitsspiegel 20 ansteigen. Dann verhindern die Schwimmerventile 29, 31 ein Eindringen des Wassers in den Bereich des Behälters 24. Nach Schaffung eines grundwasserfreien oberen Schachtbereiches 10.1 durch vorübergehende Einleitung von Druckluft in diesen Bereich lassen sich aber jederzeit wieder die aus der Zeichnung ersichtlichen Ausgangsverhältnisse zum Betrieb der Anordnung herstellen.

**Patentansprüche**

1. Brunnen zum Austreiben leichtflüchtiger Verunreinigungen aus dem Grundwasser und dem von ihm durchströmten Erdreich, durch Erzeugung von Unterdruck in einem bis in den Bereich des verunreinigten Grundwassers getriebenen Brunnenschacht (10) und Zuleitung von Frischluft unterhalb des Wasserspiegels (20) in den Brunnenschacht, dadurch gekennzeichnet, daß bei gegenüber dem Atmosphärendruck (P0) unter Überdruck (P1) stehendem Grundwasser der Brunnenschacht (10) an seinem oberen Ende mit einem die Brunnenschachtöffnung abschließenden, einen Druckaufnahmeraum (25) bildenden Behälter (24) versehen ist, der nach außen eine Anschlußöffnung für die unter Ausgleichsdruck (P0 + P1) stehende Frischluft-Zufuhrleitung (26) und eine Anschlußöffnung (27) für den Abluftkanal des Unterdruckerzeugers (16) aufweist und der vom Brunnenschacht (10) durch eine Wandung (18) getrennt ist, die eine Anschlußöffnung für den Ansaugkanal (17) des Unterdruckerzeugers (16) und eine Anschlußöffnung für die unter den Wasserspiegel (20) führende Frischluftleitung (19) aufweist.

2. Brunnen nach Anspruch 1, dadurch gekennzeichnet, daß im Brunnenschacht (10) unterhalb des Flüssigkeitsspiegels (20) ein Luftaufnahmeraum (21) ausgebildet ist, der vom Flüssigkeitsraum (10.2) des Brunnenschachtes (10) durch eine Siebwandung (22) abgegrenzt ist, und daß der Luftaufnahmeraum (21) über eine Luftleitung (19) mit dem Druckaufnahmeraum (25) verbunden ist.

3. Brunnen nach Anspruch 1 und 2, dadurch gekennzeichnet, daß in der zum Luftaufnahmeraum (21) führenden Luftleitung (19) und/oder in einem vor der Ansaugöffnung des Unterdruckerzeugers (16) ausgebildeten Ansaugschacht (17) ein Schwimmerventil (31, 29) angeordnet ist.

**Claims**

1. Well for the expulsion of volatile impurities from the groundwater and the soil if flows through by producing a negative pressure in a wellshaft (10) which is driven into the area of polluted groundwater and by feeding fresh air to below the water level (20) into the wellshaft, **characterised in that** the wellshaft (10), with groundwater at positive pressure (P1) relative to atmospheric pressure (P0), is at its top end provided with a container (24), which seals the wellshaft opening and which forms a pressurized chamber (25), comprising a connecting opening for the fresh-air supply line (26) which is under compensating pressure (P0 + P1) and a connecting opening (27) for the expelled-air channel of the negative pressure producer (16) and which is separated from the wellshaft (10) by a wall (18) which comprises a connecting opening for the intake channel (17) of the negative pressure producer (16) and a connecting opening for the fresh-air line (19) which is ducted below the water level (20).

2. Well according to claim 1, **characterised in that** in the wellshaft (10) below the liquid level (20) is established an air chamber (21) which is separated from the liquid chamber (10.2) of the wellshaft (10) by a sieve wall (22), and that the air chamber 21 is connected to the pressure chamber (25) via an air line (19).

3. Well according to claim 1 and 2, **characterised in that** a floater valve (31, 29) is arranged in the air line (19) connecting to the air chamber (21) and/or in a suction shaft (17) arranged in front of the suction opening of the negative pressure producer (16).

**Revendications**

1. Puits pour retirer des polluants volatils des eaux souterraines et de la terre traversée par celles-ci par génération d'une dépression dans un puits (10) entraîné jusque dans la zone des eaux souterraines polluées et apport d'air frais au-dessous du niveau d'eau (20) dans le puits, caractérisé en ce que les eaux souterraines étant en surpression (P1) par rapport à la pression atmosphérique (P0), le puits est muni à son extrémité supérieure d'un réceptacle (24) fermant l'ouverture de puits, formant un espace d'admission de pression (25), qui présente vers l'extérieur une ouverture de raccordement pour la conduite d'alimentation (26) en air frais étant à la pression d'équilibre (P0 + P1) et une ouverture de raccordement (27) pour le canal d'air d'échappement du générateur de dépression (16) et qui est séparé du puits (10) par une paroi (18) qui présente une ouverture de raccordement pour le canal d'aspiration (17) du générateur de dépression (16) et une ouverture de raccordement pour la conduite d'alimentation en air frais (19) conduisant au-dessous du niveau d'eau (20).

2. Puits selon la revendication 1, caractérisé en ce qu'un espace d'admission d'air (21) est formé dans le puits (10) au-dessous du niveau de liquide (20), qui est délimité de l'espace de liquide (10.2) du puits (10) par une paroi filtrante (22) et en ce que l'espace d'admission d'air (21) est relié à l'espace d'admission de pression (25) par l'intermédiaire d'une conduite d'air (19).

3. Puits selon la revendication 1 ou 2, caractérisé en ce qu'une vanne à flotteur (31, 29) est disposée dans la conduite d'air (19) conduisant à l'espace d'admission d'air (21) et/ou dans un puits d'aspiration (17) formé en amont de l'ouverture d'aspiration du générateur de dépression (16).